# EUROPÄISCHE PATENTSCHRIFT

(11) **EP 4 168 776 B1**
(45) Veröffentlichungstag und Bekanntmachung des Hinweises auf die Patenterteilung: **03.09.2025**
(21) Anmeldenummer: 21754739.7
(22) Anmeldetag: 23.07.2021
(51) Int. Cl.: G01N 21/3581, H02K 3/40

(54) **VERFAHREN ZUR ZERSTÖRUNGSFREIEN PRÜFUNG EINER STÄNDERWICKLUNGSISOLIERUNG**
METHOD FOR THE NON-DESTRUCTIVE TESTING OF A STATOR WINDING INSULATION
PROCÉDÉ DE TEST NON DESTRUCTIF D'UNE ISOLATION D'ENROULEMENT DE STATOR

(30) Priorität: 21.08.2020 DE 102020210658
(43) Veröffentlichungstag der Anmeldung: 26.04.2023
(73) Patentinhaber: Siemens Energy Global GmbH & Co. KG, 81739 München (DE); Fraunhofer-Gesellschaft zur Förderung der angewandten Forschung e.V., 80686 München (DE)
(72) Erfinder: BAUER, Maris, 67663 Kaiserslautern (DE); FRIEDERICH, Fabian, 67346 Speyer (DE); HANSMANN, Daniel, 45699 Herten (DE); JONUSCHEIT, Joachim, 67269 Grümstadt (DE); KRANE, Stefan, 45147 Essen (DE); MASHKIN, Andrey, 50829 Köln (DE); POHLMANN, Friedhelm, 45355 Essen (DE); ROHR, Claus, 68723 Schwetzingen (DE)
(86) Internationale Anmeldenummer: PCT/EP2021/070654
(87) Internationale Veröffentlichungsnummer: WO 2022/037896

(56) Entgegenhaltungen:
- CIMINO ALESSANDRO ET AL: "Analysis of fault detection in the electrical insulation system of rotating machines", 2018 INTERNATIONAL CONFERENCE ON DIAGNOSTICS IN ELECTRICAL ENGINEERING (DIAGNOSTIKA), IEEE, 4 September 2018 (2018-09-04), pages 1 - 4, XP033441850, ISBN: 978-1-5386-4423-2, [retrieved on 20181106], DOI: 10.1109/DIAGNOSTIKA.2018.8526096
- FRAUNHOFER: "Mobiler Handscanner für die zerstörungsfreie Terahertz-Prüfung", 23 February 2019 (2019-02-23), XP055857319, Retrieved from the Internet <URL:https://www.vision.fraunhofer.de/de/technologien-anwendungen/technologien/terahertz/mobiler-handscanner-zerstoerungsfreie-terahertz-pruefung.html> [retrieved on 20211103]
- ELLRICH F ET AL: "Terahertz Quality Inspection for Automotive and Aviation Industries", JOURNAL OF INFRARED, MILLIMETER AND TERAHERTZ WAVES, SPRINGER NEW YORK LLC, US, vol. 41, no. 4, 26 November 2019 (2019-11-26), pages 470 - 489, XP037106915, ISSN: 1866-6892, [retrieved on 20191126], DOI: 10.1007/S10762-019-00639-4
- IRL DULING ET AL: "Revealing hidden defects", NATURE PHOTONICS, 1 November 2009 (2009-11-01), pages 630 - 632, XP055523487, Retrieved from the Internet <URL:https://www.nature.com/articles/nphoton.2009.206.pdf> [retrieved on 20181113]

## Beschreibung

Die vorliegende Erfindung betrifft ein Verfahren zur zerstörungsfreien Prüfung zumindest von Teilbereichen einer Isolierung einer Ständerwicklung einer elektrischen Maschine, insbesondere eines Generators oder eines Hochspannungsmotors.

Die Wicklungsstäbe der Ständerwicklung von Generatoren, wie beispielsweise solche von Turbo- und Wasserkraftgeneratoren, sind mit einer Isolierung versehen. Diese Isolierung umfasst normalerweise mehrere übereinander gewickelte Wicklungslagen aus einem Isolierband, die überlappend um die Wicklungsstäbe gewickelt sind. Die Isolierbandlagen sind mit einem Harz imprägniert, dass nach dem Wickeln ausgehärtet wurde. Hinsichtlich der Formgebung umfassen die Wicklungsstäbe jeweils einen geraden Abschnitt, der größtenteils in die Nuten des Ständers bzw. Ständerblechpaketes eingesetzt sind, und zwei sich an die beiden freien Enden des geraden Abschnitts anschließende, evolventenartig gebogene Abschnitte, die auswärts aus den Nuten des Ständers vorstehen. Da das Ständerblech geerdet ist, enthält die Isolierung im Nutbereich eine elektrisch schwach leitfähige äußere Schicht, den sogenannten Außenglimmschutz, um die Potentialverteilung in der Isolierung zu steuern. Im Randbereich des geraden Abschnitts ist der Außenglimmschutz außerhalb der Nuten durch einen schwach leitfähigen Endenglimmschutz erweitert, damit die elektrischen Potentiale auf der Staboberfläche graduell gesteuert werden und das elektrische Feld im Innern der Isolierung zunehmend reduziert wird.

Während des Generatorbetriebs findet eine strukturelle Änderung der Ständerwicklungsisolierung statt, die durch elektrische, thermische, mechanische und chemische Belastungen hervorgerufen wird. Beschleunigte, längerfristig zu einer Schädigung führende Alterungserscheinungen der Isolierung sind die Folge, beispielsweise in Form von Mikrorissen oder Delaminationen. Zur Vermeidung einer Generatorschädigung ist es erforderlich, solche Alterungserscheinungen und deren Ausmaß frühzeitig zu erkennen und diese gegebenenfalls rechtzeitig zu beseitigen. Vor diesem Hintergrund werden Ständerwicklungsisolierungen in regelmäßigen Zeitabständen geprüft und nach Bedarf instandgesetzt.

Die Detektion von Alterungserscheinungen einer Ständerwicklungsisolierung erfolgt derzeit beispielsweise unter Einsatz der sogenannten Teilentladungsmessung. Diese bewährte Methode, die generell als Integralmessung gilt, kann jedoch nur diejenigen Teilbereiche einer Ständerwicklungsisolierung abdecken, in denen das elektrische Feld stark genug ausgeprägt ist, also diejenigen Teilbereiche, in denen die Wicklungsstäbe innerhalb der Ständernuten angeordnet sind, sowie die etwa 30 % der vorderen Isolierlänge umfassenden Teilbereiche unter dem jeweiligen Endenglimmschutz. Alterungserscheinungen treten aber auch in den übrigen Bereichen der Wicklungsstäbe auf, so dass eine vollständige Detektion der Alterungserscheinungen einer Ständerwicklungsisolierung unter Einsatz allein der Teilentladungsmessung nicht möglich ist. Zudem ist bei der Teilentladungsmessung eine Lokalisierung detektierter Alterungserscheinungen nicht im erforderlichen Maße möglich, da die Genauigkeit der Laufzeitmessung der Teilentladungsimpulse etwa 1,2 m beträgt.

Eine weitere bekannte Möglichkeit zur Detektion von Alterungserscheinungen einer Ständerwicklungsisolierung stellt die Hochspannungsprüfung dar, die jedoch beim Vorliegen von signifikanten Alterungserscheinungen zu einem nicht mehr reparablen Durchschlag führen kann, weshalb diese nur selten eingesetzt wird.

Ferner ist es möglich, oberflächliche Defekte oder Schäden der Isolierung unter Einsatz eines Endoskops oder Spiegels zu detektieren. Tieferliegende Fehlstellen können mit diesen Methoden jedoch nicht erfasst werden und bleiben entsprechend unerkannt.

CIMINO ALESSANDRO ET AL: "Analysis of fault detection in the electrical insulation system of rotating machines" offenbart ein Verfahren zur zerstörungsfreien Prüfung zumindest von Teilbereichen einer Isolierung einer Ständerwicklung einer elektrischen Maschine, insbesondere eines Generators oder eines Hochspannungsmotors, unter Einsatz der Terahertz-Messtechnik.

Die Terahertz-Messtechnik basiert auf elektromagnetischen Wellen im Frequenzbereich von 0,1 bis 10 Terahertz bei Wellenlängen von 3 mm bis 30 µm. Die Terahertz-Strahlung kann aufgrund niedriger Photonenenergie nicht-leitende Materialien durchdringen und bietet aufgrund ihrer kurzen Wellenlängen gleichzeitig eine räumliche Genauigkeit, mit der die Fehlstellen in Terahertz-Bildern aufgelöst und damit genau lokalisiert werden können. Darüber hinaus ermöglicht die Terahertz-Technologie eine tiefenbezogene Analyse und kann entsprechend tief in der Isolierung liegende Defekte detektieren. Da die Strahlung nicht-ionisierend und damit harmlos für biologische Materie ist, sind keine außerordentlichen Schutzmaßnahmen erforderlich, weshalb sich die Technologie für den Einsatz in Industrieumgebungen gut eignet. Dank der erfindungsgemäßen Vor-Ort-Prüfung und Diagnose des Zustands der Isolierung können im Falle einer Detektion vorhandener Defekte umgehend Instandsetzungsmaßnahmen ergriffen werden. Auf diese Weise kann das Risiko eines unerwarteten Ausfalls der entsprechenden elektrischen Maschine während des Betriebs deutlich reduziert werden, wodurch die mit einem solchen Ausfall einhergehenden Kosten vermieden werden können. Da unter Einsatz der Terahertz-Technologie genaue Aussagen über die Art, das Ausmaß und die Position vorhandener Defekte der Isolierung getroffen werden können, kann die Entwicklung detektierter und aufgrund des geringen Ausmaßes nicht sofort behobener Defekte beobachtet und protokolliert werden. Entsprechend ist es möglich, vergleichsweise zuverlässige Aussagen über den Einfluss unterschiedlicher Defekte auf die Lebensdauer der Isolierung vorherzusagen, was insbesondere vor dem Hintergrund zunehmend Bedeutung erlangt, dass sich die Fahrweise von Generatoren aufgrund des stetig zunehmenden Anteils erneuerbarer Energien deutlich verändert hat, weshalb auf bisherige Erfahrungswerte nur noch bedingt zurückgegriffen werden kann. Auch können die mit der Terahertz-Technologie gewonnenen Prüfdaten und Erkenntnisse für zukünftige Auslegungen von Isolierungen genutzt werden.

Die Erfindung betrifft ein Verfahren nach Anspruch 1 zur zerstörungsfreien Prüfung zumindest von Teilbereichen einer Isolierung einer Ständerwicklung einer elektrischen Maschine und eine entsprechende Prüfeinrichtung nach Anspruch 8.

Gemäß einer Ausgestaltung des erfindungsgemäßen Verfahrens wird die zerstörungsfreie Prüfung an denjenigen Teilbereichen der Isolierung durchgeführt, die von außen zugänglich sind, insbesondere ausschließlich an von außen zugänglichen Teilbereichen der Isolierung. Dies betrifft vor allem diejenigen Teilbereiche der Isolierung, die evolventenartig gebogene, auswärts aus Nuten des Ständers vorstehende Abschnitte der Ständerwicklung bzw. der Wicklungsstäbe umgeben. Für solche Teilbereiche ist, wie es eingangs bereits ausgeführt wurde, die Prüfung unter Einsatz der Teilentladungsmessung ungeeignet, da in diesen Teilbereichen das elektrische Feld nicht stark genug ausgeprägt ist.

Vorteilhaft wird die zerstörungsfreie Prüfung unter Verwendung eines Terahertz-Sensors durchgeführt, der entlang der Oberflächen zu prüfender Teilbereiche der Isolierung bewegt wird und Messungen an unterschiedlichen Messpositionen durchführt.

Die von dem Terahertz-Sensor ausgesendeten Sensorsignale werden bevorzugt in vorbestimmten Winkeln in die Oberflächen zu prüfender Teilbereiche der Isolierung eingeleitet, wobei die vorbestimmten Winkel vorteilhaft 90° betragen. Aufgrund des engen Raums, der für die Positionierung des Terahertz-Sensors zur Verfügung steht, kann es an bestimmten Messpositionen durchaus vorkommen, dass der bevorzugte Winkel von 90° nicht ohne weiteres einzuhalten ist und entsprechend variiert wird.

Gemäß einer Ausgestaltung der vorliegenden Erfindung werden die von dem Terahertz-Sensor als Antwort auf die ausgesendeten Signale empfangenen Signale zusammen mit der jeweiligen Position und Ausrichtung des Terahertz-Sensors zum Zeitpunkt der Aussendung der Signale bezogen auf ein vorbestimmtes Koordinatensystem gespeichert. Auf diese Weise können detektierte Defekte der Isolierung auf Basis des Koordinatensystems genau lokalisiert werden.

Bevorzugt werden die Oberflächen zu prüfender Teilbereiche der Isolierung unter Verwendung des Terahertz-Sensors abgerastert und einzelne zweidimensionale Schnittebenen oder Schnittbilder durch die Isolierung erzeugt, indem an einzelnen Messpunkten jeweils vollständige Tiefeninformationen der Isolierung, sogenannte Tiefensweeps, aufgenommen werden, wobei die Tiefeninformationen in der Terahertz-Messung insbesondere durch das frequenzmodulierte Dauerstrichradar-Verfahren (frequency-modulated continuous wave, FMCW) gewonnen werden. Hierbei wird die Differenzfrequenz zwischen einer ausgesendeten und einer von der Isolierung reflektierten Frequenzrampe im Empfängerpfad des Messsystems mittels Frequenzmischen detektiert. Aus den so erfassten Frequenzdaten wird eine Laufzeit- bzw. Tiefeninformation der einzelnen reflektierenden Schichten der Isolierung erzeugt.

Vorteilhaft werden basierend auf den erzeugten zweidimensionalen Schnittebenen oder Schnittbildern quasi 3D-Bilder der zu prüfenden Teilbereiche der Isolierung erzeugt.

Die Bewegung des Terahertz-Sensors erfolgt automatisiert unter Verwendung einer elektro-mechanischen Verschiebeeinheit, insbesondere in Form eines den Terahertz-Sensor haltenden Knickarmroboters, wodurch eine sehr genaue, flexible und reproduzierbare Führung des Terahertz-Sensors während der Durchführung der zerstörungsfreien Prüfung ermöglicht wird.

Die elektro-mechanische Verschiebeeinheit ist an dem Läufer der elektrischen Maschine angeordnet und auf diesem verfahren werden. Zum Verfahren der elektro-mechanischen Verschiebeeinheit auf dem Läufer kann die Verschiebeeinheit eine angetriebene, beispielsweise mit Rädern versehene Antriebseinheit aufweisen. Die Antriebseinheit kann an der Unterseite mit Magneten versehen sein, um diese auch über Kopf auf dem Läufer bewegen zu können.

Alternativ ist es möglich, die elektro-mechanische Verschiebeeinheit an dem Ständer der elektrischen Maschine an einer ersten Position zu befestigen und nach Durchführung einer Anzahl von Messungen zu lösen und zur Durchführung weiterer Messungen an einer zweiten Position an dem Ständer der elektrischen Maschine zu befestigen, die von der ersten Position verschieden ist. Diese Variante hat gegenüber der zuerst genannten Variante den Nachteil, dass die Verschiebeeinheit manuell mehrfach umpositioniert werden muss. Der Vorteil besteht allerdings darin, dass der Aufbau der elektro-mechanischen Verschiebeeinheit aufgrund der Tatsache, dass kein Antrieb erforderlich ist, weniger komplex und damit preiswerter in der Herstellung ist.

Ferner schafft die vorliegende Erfindung eine Prüfeinrichtung, die zur Durchführung des erfindungsgemäßen Verfahrens ausgelegt ist, umfassend eine elektro-mechanische Verschiebeeinheit und einen an dieser angeordneten Terahertz-Sensor.

Bei der elektro-mechanischen Verschiebeeinheit handelt es sich vorteilhaft um einen Knickarmroboter.

Die elektro-mechanische Verschiebeeinheit ist gemäß einer ersten Variante dazu ausgelegt, an einem Läufer einer elektrischen Maschine angeordnet und motorisch auf diesem bewegt zu werden.

Alternativ ist die elektro-mechanische Verschiebeeinheit dazu ausgelegt, an einem Ständer einer elektrischen Maschine an einer ersten Position befestigt und nach Durchführung einer Anzahl von Messungen gelöst und zur Durchführung weiterer Messungen an einer zweiten Position an dem Ständer der elektrischen Maschine befestigt zu werden, die von der ersten Position verschieden ist.

Bevorzugt weist der Terahertz-Sensor zumindest eine dielektrische Messspitze auf, die insbesondere im Bereich ihres freien Endes abgewinkelt ausgeführt ist, um dem engen Raum, der zur Positionierung des Terahertz-Sensors während der Durchführung des erfindungsgemäßen Verfahrens zur Verfügung steht, Rechnung zu tragen. Die zumindest eine Messspitze kann von einer starren Ummantelung umgeben sein, um eine Beschädigung und/oder Verbiegung der Messspitze zu verhindern.

Alternativ kann der Terahertz-Sensor ein quasioptisches Freistrahlsystem aufweisen, das dazu ausgelegt ist, die Terahertzstrahlung auf die Messposition zu richten. Das quasioptische Freistrahlsystem kann beispielsweise in Form miniaturisierter Spiegeloptiken realisiert werden.

Weitere Merkmale und Vorteile der vorliegenden Erfindung werden anhand der nachfolgenden Beschreibung unter Bezugnahme auf die beiliegende Zeichnung deutlich. Darin ist
Fig. 1 eine perspektivische schematische Teilansicht einer Ständerwicklung einer elektrischen Maschine, vorliegend in Form eines Generators;
Fig. 2 eine schematische perspektivische Ansicht eines einzelnen Ständerstabs der in Figur 1 dargestellten Ständerwicklung;
Fig. 3 eine vergrößerte Ansicht des Ausschnitts III in Figur 2, die einen evolventenartig gebogenen Abschnitt des Ständerstabs zeigt;
Fig. 4 eine schematische perspektivische Ansicht von vier Wicklungsstäben der in Figur 1 dargestellten Ständerwicklung;
Fig. 5 eine Schnittansicht, die einen oberen Wicklungsstab und einen unteren Wicklungsstab zeigt, die in einer gemeinsamen Nut des Ständers der in Figur 1 gezeigten Ständerwicklung angeordnet sind;
Fig. 6 eine perspektivische Ansicht, die eine Prüfeinrichtung gemäß einer ersten Ausführungsform der vorliegenden Erfindung während der Durchführung eines erfindungsgemäßen Prüfverfahrens zeigt;
Fig. 7 eine perspektivische Ansicht, die eine Prüfeinrichtung gemäß einer zweiten Ausführungsform der vorliegenden Erfindung während der Durchführung eines erfindungsgemäßen Prüfverfahrens zeigt, und
Fig. 8 eine schematische Ansicht, die einen Terahertz-Sensor 16 zeigt, dessen Messspitze zwischen zwei Wicklungsstäben eingeführt ist.

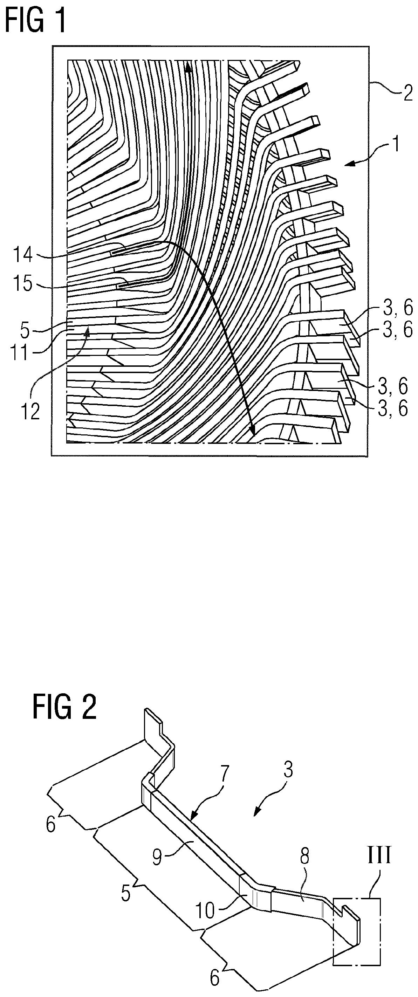

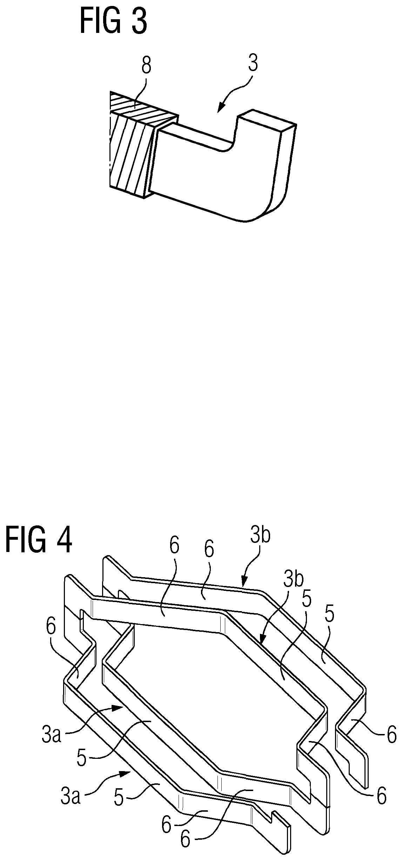

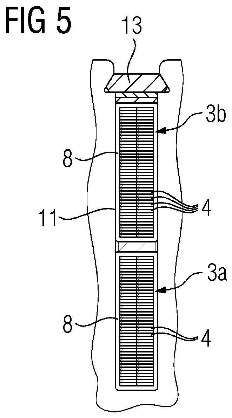

Die Figuren 1 bis 5 zeigen Teile einer Ständerwicklung 1 einer elektrischen Maschine 2, bei der es sich vorliegend um einen Generator handelt, beispielsweise um einen Turbo- oder Wasserkraftgenerator. Die Ständerwicklung 1 umfasst eine Vielzahl von Wicklungsstäben 3. Unter Bezugnahme auf die Figuren 2 und 3 ist jeder Wicklungsstab 3 aus mehreren fest konsolidierten Leitersträngen 4 hergestellt und weist einen zentralen geraden Abschnitt und zwei evolventenartig gebogene Abschnitte 6 auf, die sich beidseitig an den geraden Abschnitt 5 anschließen. Jeder Wicklungsstab 3 ist mit einer Isolierung 7 bedeckt. Die Isolierung 7 umfasst eine Basisisolierung 8, welche den geraden Abschnitt 5 und die gebogenen Abschnitte 6 vollständig bedeckt. Die Basisisolierung 8 besteht vorliegend aus Isolierband, das in mehreren Lagen überlappend um den Wicklungsstab 3 gewickelt ist. Das Isolierband ist mit Harz imprägniert, das nach dem Wickeln ausgehärtet wurde. Ferner umfasst die Isolierung 7 einen Außenglimmschutz 9, der den geraden Abschnitt 5 bedeckt, nicht aber die gebogenen Abschnitte 6, und einen Endenglimmschutz 10 in den Übergangsbereichen zwischen dem geraden Abschnitt 5 und den gebogenen Abschnitten 6. Sowohl der Außenglimmschutz 9 als auch der Endenglimmschutz 10 sind vorliegend aus einem leitenden Band gefertigt.

Die geraden Abschnitte 5 der Wicklungsstäbe 3 sind, wie es in Figur 1 dargestellt ist, in Nuten 11 eingesetzt, die in einem ringförmigen Ständer 12 der elektrischen Maschine 2 ausgebildet sind. Vorliegend sind jeweils zwei Wicklungsstäbe 3 in einer einzelnen Nut 11 radial übereinander angeordnet, und zwar zunächst ein unterer Wicklungsstab 3a und dann ein oberer Wicklungsstab 3b, die unter Verwendung eines Keilstückes 13 in der zugehörigen Nut 11 festgelegt sind. Die gebogenen Abschnitte 6 der unteren Wicklungsstäbe 3a sind kreuzend zu den gebogenen Abschnitten 6 der oberen Wicklungsstäbe 3b ausgerichtet, wie es in Figur 1 durch die Pfeile 14 und 15 angedeutet ist, wobei die gebogenen Abschnitte 6 beider freien Enden jedes unteren Wicklungsstabs 3a mit den freien Enden der gebogenen Abschnitte 6 der oberen Wicklungsstäbe 3b verbunden sind und umgekehrt. Die Verbindung ist über nicht näher dargestellte Verbindungselemente realisiert.

Während des Generatorbetriebs findet eine strukturelle Änderung der Isolierung 7 statt, die durch elektrische, thermische, mechanische und/oder chemische Belastungen hervorgerufen wird. Beschleunigte, längerfristig zu einer Schädigung führende Alterungserscheinungen der Isolierung 7 sind die Folge, beispielsweise in Form von Mikrorissen, Delaminationen, Fehlstellen oder dergleichen. Zur Vermeidung einer Generatorschädigung ist es entsprechend erforderlich, solche Alterungserscheinungen und deren Ausmaß frühzeitig zu erkennen und diese gegebenenfalls rechtzeitig zu beseitigen.

Erfindungsgemäß wird vorgeschlagen, an den von außen zugänglichen Teilbereichen der Ständerwicklung 1 eine zerstörungsfreie Prüfung der Isolierung 7 in-situ am Aufstellort der elektrischen Maschine 2 unter Einsatz der Terahertz-Messtechnik durchzuführen. Dies betrifft in erster Linie diejenigen Teilbereiche der Isolierung 7, welche die gebogenen Abschnitte 6 der Wicklungsstäbe 3 umgeben, ggf. aber auch weitere Teilbereiche der Isolierung 3, die beispielsweise durch Kühlöffnungen oder dergleichen zugänglich sind.

Die Terahertz-Messtechnik ist eine Technik, die mit elektromagnetischer Strahlung im Terahertzbereich arbeitet, also in einem Frequenzbereich zwischen 0,1 bis 10 Terahertz. Mit elektromagnetischer Strahlung in diesem Frequenzbereich kann Materie durchdrungen werden, die für sichtbares und infrarotes Licht undurchlässig ist, vor allem nicht-metallische Materialien, so dass Beschädigungen der Isolierung 7 detektierbar sind. Die Wellenlängen der Strahlung liegen im Bereich von 30µm bis 3mm, so dass auch eine gute Ortsauflösung gegeben ist. Entsprechend lassen sich detektierte Fehlstellen auch gut lokalisieren. Die Strahlung ist sehr energiearm, weshalb sie für den Menschen nicht gesundheitsschädlich ist.

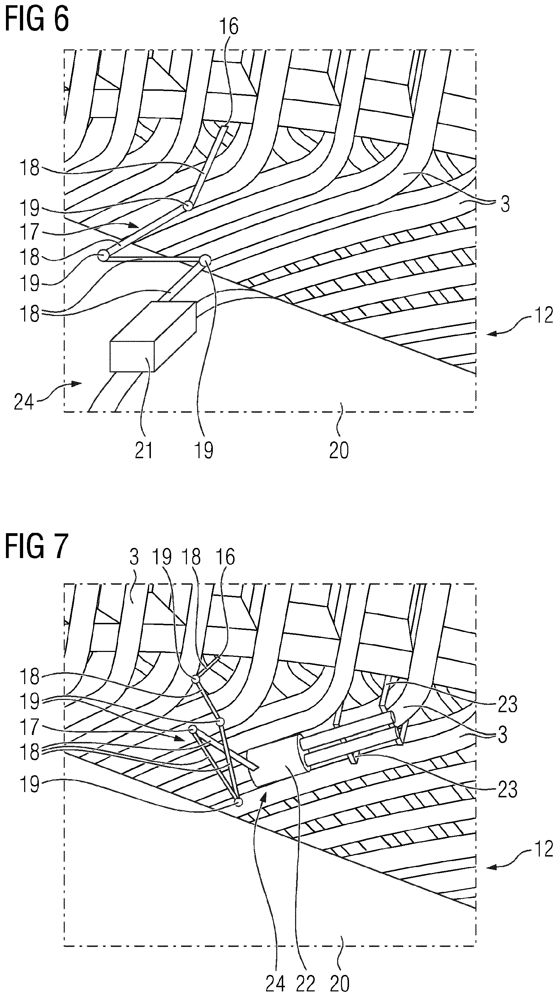

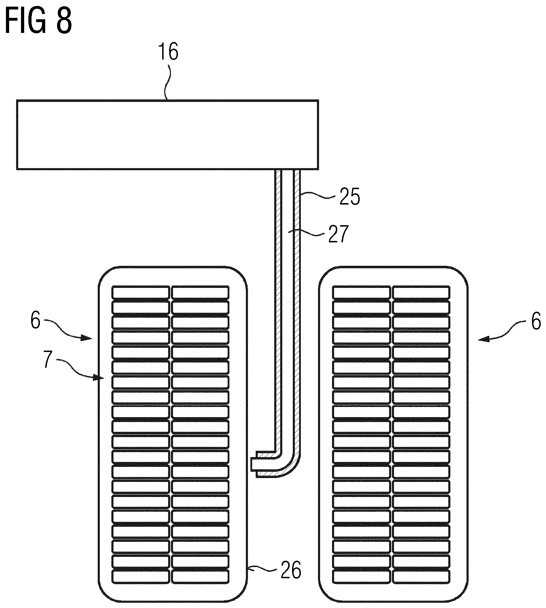

Zur Durchführung des Verfahrens wird, wie es in den Figuren 6 bis 8 gezeigt ist, vorliegend eine einen Terahertz-Sensor 16 aufweisende Prüfeinrichtung 24 eingesetzt, wobei der Terahertz-Sensor 16 entlang der Oberflächen der zu prüfenden Teilbereiche der Isolierung 7 bewegt wird und Messungen an unterschiedlichen Messpositionen durchführt. Die von dem Terahertz-Sensor 16 ausgesendeten Sensorsignale in Form elektromagnetischer Strahlung im Terahertzbereich werden dabei in vorbestimmten Winkeln in die Oberflächen der zu prüfenden Teilbereiche der Isolierung 7 eingeleitet, die bevorzugt 90° betragen. Um dem engen Bauraum zwischen den benachbarten gebogenen Abschnitten 6 der Wicklungsstäbe 3 in Kombination mit den bevorzugten vorbestimmten Winkeln Rechnung zu tragen, weist der Terahertz-Sensor 16, wie es in Figur 8 beispielhaft dargestellt ist, vorteilhaft eine oder mehrere dielektrische Messspitzen 25 auf, die im Bereich ihres freien Endes abgewinkelt ausgeführt sind. Entsprechend kann der Terahertz-Sensor 16 zwischen benachbart angeordneten gebogenen Abschnitten 6 der Wicklungsstäbe 3 derart eingeführt werden, dass das freie Ende der Messspitze 25 senkrecht oder zumindest nahezu senkrecht zu derjenigen Oberfläche 26 der Isolierung 7 ausgerichtet sind, über welche bzw. entlang welcher die Messspitze geführt werden soll. Die Messspitze 25 ist vorliegend von einer starren Ummantelung 27 umgeben, welche die Messspitze 25 schützt und ein Verbiegen verhindert. Alternativ kann der Terahertz-Sensor 16 anstelle gebogener dielektrischer Messspitzen auch über ein miniaturisiertes quasioptisches Freistrahlsystem verfügen, das dazu ausgelegt ist, die ausgesendete Terahertzstrahlung im Bereich der bevorzugten vorbestimmten Winkel auf die jeweiligen Messpositionen zu richten.

Die Bewegung des Terahertz-Sensors 16 erfolgt vorliegend automatisiert unter Verwendung einer elektro-mechanischen Verschiebeeinheit 17, die in Form eines den Terahertz-Sensor 16 haltenden Knickarmroboters ausgeführt ist, dessen Armglieder 18 über eine Vielzahl von Gelenken 19 miteinander verbunden sind. Die elektro-mechanische Verschiebeeinheit 17 kann, wie es in Figur 6 gezeigt ist, an dem Läufer 20 der elektrischen Maschine 2 angeordnet und auf diesem verfahrbar sein. Hierzu ist eine motorisierte Antriebseinheit 21 vorgesehen, die mit Rädern oder dergleichen versehen ist. An der Unterseite ist die Antriebseinheit 21 mit nicht näher dargestellten Magneten versehen, um diese auch über Kopf auf dem Läufer 20 bewegen zu können. Alternativ ist es möglich, die elektro-mechanische Verschiebeeinheit 17 wie in Figur 7 gezeigt an dem Ständer 12 der elektrischen Maschine 2 an einer ersten Position zu befestigen und nach Durchführung einer Anzahl von Messungen zu lösen und zur Durchführung weiterer Messungen an einer zweiten Position an dem Ständer 12 zu befestigen, die von der ersten Position verschieden ist. Hierzu verfügt die elektro-mechanische Verschiebeeinheit 17 über eine Basiseinheit 22, die mit geeignet ausgebildeten Befestigungsmitteln 23 versehen ist, die ein lösbares Befestigen der Basiseinheit 22 am Ständer 12 ermöglichen.

Die von dem Terahertz-Sensor 16 als Antwort auf die ausgesendeten Signale empfangenen Signale werden dann zusammen mit der jeweiligen Position und Ausrichtung des Terahertz-Sensors 16 bzw. seiner Messspitze(n) 25 zum Zeitpunkt der Aussendung der Signale bezogen auf ein vorbestimmtes Koordinatensystem gespeichert. Bei jeder Messung wird in Einleitungsrichtung der ausgesendeten Signale ein Tiefensweep der Isolierung 7 durchgeführt und entsprechend eine zweidimensionale Schnittebene der Isolierung 7 generiert. Die Tiefeninformationen werden dabei bevorzugt durch das frequenzmodulierte Dauerstrichradar-Verfahren gewonnen. Aus einer Vielzahl solcher Schnittebenen in Bewegungsrichtung des Terahertz-Sensors 17 können dann quasi-3D-Bilder der geprüften Teilbereiche der Isolierung 7 zusammengesetzt werden. Die Positionen darin enthaltener Defekte lassen sich dann auf Basis des Koordinatensystems problemlos lokalisieren.

## Patentansprüche

1. Verfahren zur zerstörungsfreien Prüfung zumindest von Teilbereichen einer Isolierung (7) einer Ständerwicklung (1) einer elektrischen Maschine (2), insbesondere eines Generators oder eines Hochspannungsmotors,
wobei
die zerstörungsfreie Prüfung in-situ am Aufstellort der elektrischen Maschine (2) unter Einsatz der Terahertz-Messtechnik durchgeführt wird,
wobei die zerstörungsfreie Prüfung unter Verwendung eines Terahertz-Sensors (16) durchgeführt wird,
der entlang der Oberflächen zu prüfender Teilbereiche der Isolierung (7) bewegt wird und
Messungen an unterschiedlichen Messpositionen durchführt,
wobei die Bewegung des Terahertz-Sensors (16) automatisiert unter Verwendung einer elektro-mechanischen Verschiebeeinheit (17) erfolgt,
insbesondere in Form eines den Terahertz-Sensor (16) haltenden Knickarmroboters
und wobei die elektro-mechanische Verschiebeeinheit (17) an dem Läufer (20) der elektrischen Maschine (2) angeordnet und auf diesem verfahren wird.

2. Verfahren nach Anspruch 1,
**dadurch gekennzeichnet, dass**
die zerstörungsfreie Prüfung an denjenigen Teilbereichen der Isolierung (7) durchgeführt wird, die von außen zugänglich sind, vor allem an Teilbereichen der Isolierung (7), die evolventenartig gebogene, auswärts aus Nuten (11) des Ständers (12) vorstehende Abschnitte (6) der Ständerwicklung (1) umgeben.

3. Verfahren nach Anspruch 1,
**dadurch gekennzeichnet, dass**
die von dem Terahertz-Sensor (16) ausgesendeten Sensorsignale in vorbestimmten Winkeln in die Oberflächen zu prüfender Teilbereiche der Isolierung (7) eingeleitet werden, wobei die vorbestimmten Winkel bevorzugt 90° betragen.

4. Verfahren nach Anspruch 1 und 3,
**dadurch gekennzeichnet, dass**
die von dem Terahertz-Sensor (16) als Antwort auf die ausgesendeten Signale empfangenen Signale zusammen mit der jeweiligen Position und Ausrichtung des Terahertz-Sensors (16) zum Zeitpunkt der Aussendung der Signale bezogen auf ein vorbestimmtes Koordinatensystem gespeichert werden.

5. Verfahren nach einem der Ansprüche 1, 3 oder 4,
**dadurch gekennzeichnet, dass**
unter Verwendung des Terahertz-Sensors (16) die Oberflächen zu prüfender Teilbereiche der Isolierung (7) abgerastert und einzelne zweidimensionale Schnittebenen oder Schnittbilder durch die Isolierung (7) erzeugt werden, indem an einzelnen Messpunkten jeweils vollständige Tiefeninformationen der Isolierung (7) aufgenommen werden, wobei die Tiefeninformationen in der Terahertz-Messung insbesondere durch das frequenzmodulierte Dauerstrichradar-Verfahren gewonnen werden.

6. Verfahren nach Anspruch 5,
**dadurch gekennzeichnet, dass**
basierend auf den erzeugten zweidimensionalen Schnittebenen oder Schnittbildern quasi-3D-Bilder der zu prüfenden Teilbereiche der Isolierung (7) erzeugt werden.

7. Verfahren nach Anspruch 1,
**dadurch gekennzeichnet, dass**
die elektro-mechanische Verschiebeeinheit (17) an dem Ständer (12) der elektrischen Maschine (2) an einer ersten Position befestigt und nach Durchführung einer Anzahl von Messungen gelöst und zur Durchführung weiterer Messungen an einer zweiten Position an dem Ständer (12) der elektrischen Maschine (2) befestigt wird, die von der ersten Position verschieden ist.

8. Prüfeinrichtung (24), die zur Durchführung einer zerstörungsfreien Prüfung zumindest von Teilbereichen einer Isolierung (7) einer Ständerwicklung (1) einer elektrischen Maschine nach einem der vorhergehenden Ansprüche ausgelegt ist, umfassend eine an dem Läufer (20) der elektrischen Maschine (2) angeordnete elektro-mechanische Verschiebeeinheit (17) und einen an dieser angeordneten Terahertz-Sensor (16).

9. Prüfeinrichtung (24) nach Anspruch 8,
**dadurch gekennzeichnet, dass**
es sich bei der elektro-mechanischen Verschiebeeinheit (17) um einen Knickarmroboter handelt.

10. Prüfeinrichtung nach Anspruch 8 oder 9,
**dadurch gekennzeichnet, dass**
die elektro-mechanische Verschiebeeinheit (17) dazu ausgelegt ist, an einem Ständer (12) einer elektrischen Maschine (2), insbesondere eines Generators oder eines Hochspannungsmotors, angeordnet und auf diesem motorisch bewegt zu werden.

11. Prüfeinrichtung (24) nach Anspruch 8 oder 9,
**dadurch gekennzeichnet, dass**
die elektro-mechanische Verschiebeeinheit (17) dazu ausgelegt ist, an einem Ständer (12) einer elektrischen Maschine (2), insbesondere eines Generators oder eines Hochspannungsmotors, an einer ersten Position befestigt und nach Durchführung einer Anzahl von Messungen gelöst und zur Durchführung weiterer Messungen an einer zweiten Position an dem Ständer (12) der elektrischen Maschine (2) befestigt zu werden, die von der ersten Position verschieden ist.

12. Prüfeinrichtung (24) nach einem der Ansprüche 8 bis 11, **dadurch gekennzeichnet, dass**
der Terahertz-Sensor (16) zumindest eine dielektrische Messspitze (25) aufweist, die insbesondere im Bereich ihres freien Endes abgewinkelt ausgeführt ist.

13. Prüfeinrichtung (24) nach einem der Ansprüche 8 bis 11, **dadurch gekennzeichnet, dass**
der Terahertz-Sensor (16) ein quasioptisches Freistrahlsystem aufweist, das dazu ausgelegt ist, die Terahertzstrahlung auf die Messposition zu richten.

## Claims

1. Method for the non-destructive testing of at least partial regions of an insulation (7) of a stator winding (1) of an electric machine (2), in particular a generator or a high-voltage motor,
wherein the non-destructive testing is carried out in situ at the installation site of the electric machine (2) using terahertz measurement technology,
wherein the non-destructive testing is carried out using a terahertz sensor (16),
which is moved along the surfaces of partial regions of the insulation (7) that are to be tested and
carries out measurements at different measurement positions, wherein the terahertz sensor (16) is moved in an automated manner using an electromechanical displacement unit (17),
in particular in the form of a buckling arm robot holding the terahertz sensor (16)
and wherein the electromechanical displacement unit (17) is arranged on the rotor (20) of the electric machine (2) and is moved on said rotor.

2. Method according to Claim 1,
**characterized in that**
the non-destructive testing is carried out on those partial regions of the insulation (7) which are accessible from the outside, especially on partial regions of the insulation (7) which surround involutely curved sections (6) of the stator winding (1) that protrude outwardly from grooves (11) in the stator (12).

3. Method according to Claim 1,
**characterized in that**
the sensor signals emitted by the terahertz sensor (16) are introduced at predetermined angles into the surfaces of partial regions of the insulation (7) that are to be tested, wherein the predetermined angles are preferably 90°.

4. Method according to Claims 1 and 3,
**characterized in that**
the signals received by the terahertz sensor (16) in response to the emitted signals are stored together with the respective position and orientation of the terahertz sensor (16) at the time at which the signals are emitted, based on a predetermined coordinate system.

5. Method according to one of Claims 1, 3 and 4,
**characterized in that**
the terahertz sensor (16) is used to scan the surfaces of partial regions of the insulation (7) that are to be tested and individual two-dimensional sectional planes or sectional images through the insulation (7) are generated by recording complete depth information relating to the insulation (7) at individual measurement points in each case, wherein the depth information in the terahertz measurement is obtained in particular by way of the frequency-modulated continuous wave radar method.

6. Method according to Claim 5,
**characterized in that**
quasi-3D images of the partial regions of the insulation (7) that are to be tested are generated based on the generated two-dimensional sectional planes or sectional images.

7. Method according to Claim 1,
**characterized in that**
the electromechanical displacement unit (17) is attached to the stator (12) of the electric machine (2) at a first position and detached after a number of measurements have been carried out, and is attached to the stator (12) of the electric machine (2) at a second position, different from the first position, in order to carry out further measurements.

8. Testing device (24) designed for carrying out non-destructive testing of at least partial regions of an insulation (7) of a stator winding (1) of an electric machine according to one of the preceding claims, comprising an electromechanical displacement unit (17) arranged on the rotor (20) of the electric machine (2), and a terahertz sensor (16) arranged on said unit.

9. Testing device (24) according to Claim 8,
**characterized in that**
the electromechanical displacement unit (17) is a buckling arm robot.

10. Testing device according to Claim 8 or 9,
**characterized in that**
the electromechanical displacement unit (17) is designed to be arranged on a stator (12) of an electric machine (2), in particular a generator or a high-voltage motor, and to be moved on said stator in a motor-driven manner.

11. Testing device (24) according to Claim 8 or 9,
**characterized in that**
the electromechanical displacement unit (17) is designed to be attached to a stator (12) of an electric machine (2), in particular a generator or a high-voltage motor, at a first position and detached after a number of measurements have been carried out, and to be attached to the stator (12) of the electric machine (2) at a second position, different from the first position, in order to carry out further measurements.

12. Testing device (24) according to one of Claims 8 to 11, **characterized in that**
the terahertz sensor (16) has at least one dielectric measurement tip (25), which is angled in particular in the region of its free end.

13. Testing device (24) according to one of Claims 8 to 11, **characterized in that**
the terahertz sensor (16) has a quasi-optical free-beam system designed to direct the terahertz radiation onto the measurement position.

## Revendications

1. Procédé de contrôle non destructif d'au moins des zones partielles d'une isolation (7) d'un enroulement (1) de stator d'une machine (2) électrique, en particulier d'un générateur ou d'un moteur de haute tension,
dans lequel
on effectue le contrôle non destructif in-situ à l'emplacement d'installation de la machine (2) électrique, en utilisant la technique de mesure térahertz,
dans lequel on effectue le contrôle non destructif en utilisant un capteur (16) térahertz,
que l'on déplace le long des surfaces des zones partielles à contrôler de l'isolation (7) et
on effectue des mesures en des positions de mesures différentes, dans lequel le déplacement du capteur (16) térahertz s'effectue de manière automatisée en utilisant une unité (17) de déplacement électromécanique,
en particulier sous la forme d'un robot à bras coudé tenant le capteur (16) térahertz,
et dans lequel on met l'unité (17) de déplacement électromagnétique sur le rotor (20) de la machine (2) électrique et on l'y déplace.

2. Procédé suivant la revendication 1,
**caractérisé en ce que** l'
on effectue le contrôle non destructif sur les zones partielles de l'isolation (7), qui sont accessibles de l'extérieur, surtout sur des zones partielles de l'isolation (7), qui entourent des segments (6) de l'enroulement (1) de stator de type en développante en saillie vers l'extérieur d'encoches (11) du stator (12).

3. Procédé suivant la revendication 1,
**caractérisé en ce que** l'
on envoie les signaux de capteur émis par le capteur (16) térahertz suivant des angles déterminés à l'avance aux surfaces des zones partielles à contrôler de l'isolation (7), les angles déterminés à l'avance étant de préférence de 90°.

4. Procédé suivant la revendication 1 et 3,
**caractérisé en ce que** l'
on met en mémoire les signaux reçus par le capteur (16) térahertz comme réponse aux signaux émis ensemble avec la position et l'orientation respectives du capteur (16) térahertz à l'instant de l'émission des signaux rapportés à un système de coordonnées déterminé à l'avance.

5. Procédé suivant l'une des revendications 1, 3 ou 4,
**caractérisé en ce qu'**
en utilisant le capteur (16) térahertz, on balaie des surfaces des zones partielles à contrôler de l'isolation (7) et on produit divers plans de coupe en deux dimensions ou images de coupe dans l'isolation (7), en enregistrant en divers points de mesure respectivement des informations de profondeur complète de l'isolation (7), les isolations de profondeur étant obtenues dans la mesure térahertz, en particulier par le procédé radar à émission continue modulé en fréquence.

6. Procédé suivant la revendication 5,
**caractérisé en ce que** l'
on produit, sur la base des plans de coupe en deux dimensions ou des images de coupe produits, des images quasiment en 3D, des zones partielles à contrôler de l'isolation (7).

7. Procédé suivant la revendication 1,
**caractérisé en ce que** l'
on fixe l'unité (17) de déplacement électromécanique sur le stator (12) de la machine (2) électrique en une première position et on le détache après avoir effectué un certain nombre de mesures et on le fixe pour effectuer d'autres mesures en une deuxième position sur le stator (12) de la machine (2) électrique, qui est différente de la première position.

8. Dispositif (24) de contrôle, qui est conçu pour effectuer un contrôle non destructif d'au moins des zones partielles d'une isolation (7) d'un enroulement (1) de stator d'une machine électrique suivant l'une des revendications précédentes, comprenant une unité (17) de déplacement électromécanique montée sur le rotor (20) de la machine (2) électrique et un capteur (16) térahertz monté sur l'unité de déplacement.

9. Dispositif (24) de contrôle suivant la revendication 8, **caractérisé en ce que**
l'unité (17) de déplacement électromécanique est un robot à bras coudé.

10. Dispositif de contrôle suivant la revendication 8 ou 9, **caractérisé en ce que**
l'unité (17) de déplacement électromécanique est conçue pour être mise sur un stator (12) d'une machine (2) électrique, en particulier d'un générateur ou d'un moteur de haute tension, et pour y être déplacé d'une façon motorisée.

11. Dispositif (24) de contrôle suivant la revendication 8 ou 9,
**caractérisé en ce que**
l'unité (17) de déplacement électromécanique est conçue pour être fixée sur un stator (12) d'une machine (2) électrique, en particulier d'un générateur ou d'un moteur de haute tension, en une première position et pour en être détachée après avoir effectué un certain nombre de mesures et être fixée pour effectuer d'autres mesures en une deuxième position du stator (12) de la machine (2) électrique, qui est différente de la première position.

12. Dispositif (24) de contrôle suivant l'une des revendications 8 à 11,
**caractérisé en ce que**
le capteur (16) térahertz a au moins une pointe (25) diélectrique de mesure, qui est coudée, en particulier dans la partie de son extrémité libre.

13. Dispositif (24) suivant l'une des revendications 8 à 11, **caractérisé en ce que**
le capteur (16) térahertz a un système à faisceau libre quasi optique, qui est conçu pour diriger le rayonnement térahertz sur la position de mesure.
